(19) **Europäisches Patentamt / European Patent Office / Office européen des brevets**

(11) **EP 4 636 673 A1**

(12) # EUROPEAN PATENT APPLICATION

(43) Date of publication:
**22.10.2025 Bulletin 2025/43**

(21) Application number: **25164585.9**

(22) Date of filing: **18.03.2025**

(51) International Patent Classification (IPC):
**G06Q 20/40** (2012.01) **H04M 15/00** (2024.01)

(52) Cooperative Patent Classification (CPC):
**H04M 15/8044; G06N 20/00; G06Q 20/401; G06Q 20/4016; H04L 51/214**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.04.2024 US 202418635245**

(71) Applicant: **Worldpay, LLC
Symmes Township, OH 45249 (US)**

(72) Inventors:
- **KETTLER, Dennis A.**
  **Symmes Township, 45249 (US)**
- **HONG, Tao**
  **Symmes Township, 45249 (US)**
- **HICKMAN, Eric**
  **Symmes Township, 45249 (US)**

(74) Representative: **Patel, Nikesh et al
Venner Shipley LLP
200 Aldersgate
London EC1A 4HD (GB)**

(54) **SYSTEMS AND METHODS FOR ROUTING AN ELECTRONIC MESSAGE IN SYSTEM NETWORK**

(57) Systems and methods are disclosed for determining network pairings and a plurality of factors associated with the network pairings for secure and efficient routing of electronic message(s). The method includes receiving a request from a first system for an electronic message associated with an access device of a second system, wherein the electronic message is a special electronic message; determining network pairings between a plurality of networks associated with the access device and a plurality of regional networks for authenticating the electronic message; processing past data associated with the network pairings to determine a plurality of factors for routing the electronic message; and routing the electronic message to at least one of the plurality of networks associated with the access device or at least one of the plurality of regional networks based on the plurality of factors.

EP 4 636 673 A1

**Description**

**TECHNICAL FIELD**

This present disclosure relates generally to the field of data processing, data security, and data routing. In particular, the present disclosure relates to analyzing data associated with a system for generating recommendation(s) for efficient routing of electronic message(s).

**BACKGROUND**

Electronic messages are not always secure for transmitting sensitive data, which can make it challenging for service providers to preemptively identify potential threats and devise methodologies for preventing such threats to secure electronic messages. The existing methods are technically challenged in minimizing security breaches and maximizing positive user experience to create a system that deters attackers and is user-friendly. For example, traditional methods that implemented reduced authentication resulted in increased vulnerability to unauthorized access and fraudulent activities, as fewer layers of verification made it easier for malicious actors to exploit security gaps in the system. The current methods have implemented multiple authentication mechanisms to prevent security breaches, but such security measures create friction in user experience resulting in user frustration and abandonment of the electronic messages. Implementing robust authentication processes without impeding the user experience remains a challenge, as overly strict measures result in false positives or deter legitimate users. Accordingly, there is a need for comprehensive yet unobtrusive security mechanisms that balance data security, data routing, and user experiences.

**SUMMARY OF THE DISCLOSURE**

The present disclosure solves the technical challenges typically encountered during electronic messaging by determining network pairings and plurality of factors associated with the network pairings for secure and efficient routing of electronic message(s).

In some embodiments, a computer-implemented method includes: receiving, by one or more processors, a request from a first system for an electronic message associated with an access device of a second system, wherein the electronic message is a special electronic message; determining, by the one or more processors, network pairings between a plurality of networks associated with the access device and a plurality of regional networks for authenticating the electronic message; processing, by the one or more processors, past data associated with the network pairings to determine a plurality of factors for routing the electronic message; and routing, by the one or more processors, the electronic message to at least one of the plurality of networks associated with the access device or at least one of the plurality of regional networks based on the plurality of factors.

In some embodiments, a system includes: one or more processors of a computing system; and at least one non-transitory computer readable medium storing instructions which, when executed by the one or more processors, cause the one or more processors to perform operations including: receiving a request from a first system for an electronic message associated with an access device of a second system, wherein the electronic message is a special electronic message; determining network pairings between a plurality of networks associated with the access device and a plurality of regional networks for authenticating the electronic message; processing past data associated with the network pairings to determine a plurality of factors for routing the electronic message; and routing the electronic message to at least one of the plurality of networks associated with the access device or at least one of the plurality of regional networks based on the plurality of factors.

In some embodiments, a non-transitory computer readable medium storing instructions which, when executed by one or more processors of a computing system, cause the one or more processors to perform operations including: receiving a request from a first system for an electronic message associated with an access device of a second system, wherein the electronic message is a special electronic message; determining network pairings between a plurality of networks associated with the access device and a plurality of regional networks for authenticating the electronic message; processing past data associated with the network pairings to determine a plurality of factors for routing the electronic message; and routing the electronic message to at least one of the plurality of networks associated with the access device or at least one of the plurality of regional networks based on the plurality of factors.

It is to be understood that both the foregoing general description and the following detailed description are example and explanatory only and are not restrictive of the detailed embodiments, as claimed.

**BRIEF DESCRIPTION OF THE DRAWINGS**

The accompanying drawings, which are incorporated in and constitute a part of this specification, illustrate various example embodiments and together with the description, serve to explain the principles of the disclosed embodiments.

FIG. 1 is a diagram showing an example of a system for determining network pairings and a plurality of factors associated with the network pairings for secure and efficient routing of electronic message(s), according to aspects of the disclosure.

FIG. 2 is a flowchart of a process for determining network pairings and a plurality of factors associated with the network pairings for secure and efficient routing of electronic message(s), according to aspects of the disclosure.

FIG. 3 shows an example machine learning training flow chart.

FIG. 4 illustrates an implementation of a computer system that executes techniques presented herein.

## DETAILED DESCRIPTION OF EMBODIMENTS

While principles of the present disclosure are described herein with reference to illustrative embodiments for particular applications, it should be understood that the disclosure is not limited thereto. Those having ordinary skill in the art and access to the teachings provided herein will recognize additional modifications, applications, embodiments, and substitution of equivalents all fall within the scope of the embodiments described herein. Accordingly, the embodiments are not to be considered as limited by the foregoing description.

Various non-limiting embodiments of the present disclosure will now be described to provide an overall understanding of the principles of the structure, function, and use of systems and methods disclosed herein for determining network pairings and plurality of factors associated with the network pairings for secure and efficient routing of electronic message(s).

With the advance in electronic commerce, users are able to perform electronic messaging (e.g., online transactions to add/remove funds from an account for a service rendered) without having to physically present the access device (e.g., a debit card, a credit card, etc.). For example, the user may enter information associated with an access device as a form of payment to complete the electronic message. During such card-not-present (CNP) transactions, information regarding the access device (e.g., the access device number, the name of the owner of the access device (e.g., authorized users), the expiration date of the access device, the billing address, the shipping address, and/or the CVV2 code) are transmitted from the device associated with the merchant(s) or the customer(s). Given the physical absence of the access device, authentication of the user in CNP transactions has to be performed using other means to ensure that the electronic message is legitimate. To minimize fraud, current approaches implement specific protocols for authenticating the users (e.g., multi-factor authentication), although such security measures reduce fraud in CNP transactions, they increase friction which results in a high drop-off rate and a poor user experience.

As discussed, CNP transactions have a higher risk of fraud because it is difficult to verify the legitimacy of the users. For example, an unauthorized user may provide the access device information during a telephone or an internet-based electronic message (e.g., an online transaction), and the authorized user may later challenge the transaction as fraudulent. The standard checks of card numbers and codes (e.g., CVV2 codes) are not sufficient to prevent fraud in CNP transactions. Hence, various authentication mechanisms (e.g., digital signature verifications, multi-factor authentication, address verification, etc.) are widely used in CNP transactions to enhance security. However, overly strict measures result in false positives, disproportionately affecting CNP transactions, for example, legitimate users who are incorrectly classified as fraudulent users may cancel and stop utilizing the service. The conventional methods are technically challenged in understanding the complex relationship between data security and user experience. Hence, there is a need for advanced data-driven models, methods, and tools for analyzing data (e.g., real-time or near real-time data) associated with a system for determining network pairings and a plurality of factors associated with the network pairings (e.g., fraudulent electronic message, chargeback, latency in communication, cost factors, etc.) for secure and efficient routing of electronic message.

During CNP transactions, there is a high risk of erroneously classifying an illegitimate electronic message as legitimate, whereupon the users of the access devices may initiate a transaction dispute (e.g., chargeback), with the issuer(s) to return some or all of the values (e.g., funds) associated with the disputed electronic message to the account corresponding to the access device. Chargebacks can also occur as a result of friendly fraud, where the electronic message was authorized by the user(s) of the access devices but the user(s) later attempts to fraudulently reverse the charges. Chargebacks are financially detrimental to the merchant(s) and may affect their ability to accept certain access devices in the future. While merchant(s) may be tempted to dispute every chargeback to avoid lost revenue, it is important to balance the value of the transaction, the reason for the chargeback, and compelling evidence before disputing the chargeback. The merchant(s) also need to consider whether they might lose a valued customer when they dispute a chargeback. The existing solutions are not accurate and the prevalence of false-positive in current fraud detection mechanisms discourages the merchant(s) from disputing the chargeback. Merchant(s) are adversely affected by such inefficient methods as they experience high rates of false positives leading to lost legitimate transactions and heightened susceptibility to fraud, thereby negatively influencing financial metrics and compromising customer relations through suboptimal technical implementations.

Computer networks are designed to optimize efficient network communication, however, latency in communicating electronic messages can influence the efficiency of data-dependent systems. In systems relying on real-time or near real-time data processing, delays introduced by communication latency can disrupt the synchronization of components, leading to outdated or inaccurate data. This discrepancy can compromise the decision-making process, hinder system responsiveness, and undermine overall performance. Moreover, in the context of fraud detection and prevention, latency can hinder the system's ability to promptly assess and respond to potential security threats, increasing the risk of unauthorized transactions. Minimizing latency is essential to uphold speed, reliability, and security during electronic messaging.

The present disclosure provides embodiments that solve the technical shortcoming in the field of data processing and data routing, and that lead to significant technical improvements in the same field by achieving successful authorization while balancing cost without increasing the likelihood of fraud. System 100 overcomes the technical shortcomings of the current technologies by determining network pairings and plurality of factors associated with the network pairings for secure and efficient routing of electronic message(s). By determining the plurality of factors associated with the network pairings (e.g., the probability of fraudulent electronic message, chargeback, latency in communication, and/or cost factors) at an earlier stage of the transaction processing, the system 100 reduces the data processing and other network resources that would otherwise be applied to such transactions, as well as reduce losses that might otherwise occur if determined at a later time. By assessing chargeback likelihood in the initial stages, the system 100 implements additional security measures to prevent disputes before they occur. Similarly, addressing latency issues early on ensures a timely response to potential threats, bolstering the overall security of the electronic message. The system 100 introduces an exhaustive, systematic, and sophisticated process for measuring fraud, chargeback, latency, and/or cost factors during electronic messaging, and incorporates such measures into the decision-making process.

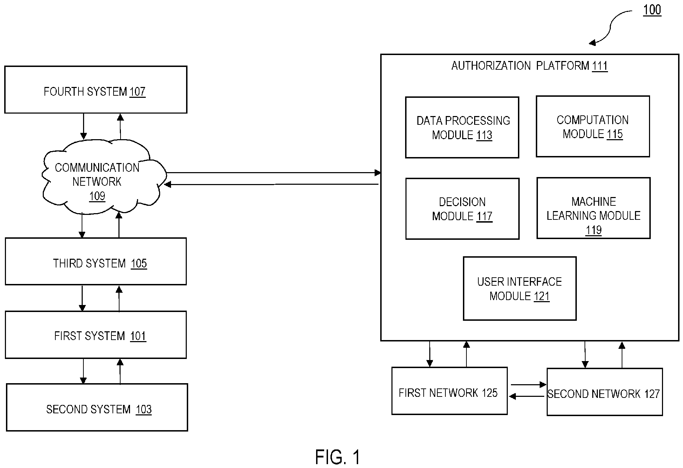

FIG. 1 is a diagram showing an example of a system for determining network pairings and a plurality of factors associated with the network pairings for secure and efficient routing of electronic message(s), according to aspects of the disclosure. FIG. 1 includes the system 100 that comprises a first system 101, a second system 103, a third system 105, a fourth system 107, a communication network 109, an authorization platform 111, a first network 125, and a second network 127.

In one embodiment, the first system 101 includes any type of mobile terminal, wireless terminal, fixed terminal, or portable terminal utilized by merchant(s) to communicate with the other system(s) within the system 100. The first system 101 include, but are not restricted to, a point-of-sale (POS) device, an electronic cash register (ECR), a mobile handset, a wireless communication device, a station, a unit, a device, a multimedia computer (e.g., computer system 400), an Internet node, a communicator, a dashboard computer, a data server, or any combination thereof, including the accessories and peripherals of these devices, or any combination thereof. The first system 101 facilitates various input means (e.g., a touch screen capability, a keyboard and keypad data entry, a voice-based input mechanism, etc.) and output means (e.g., generating, sharing, and viewing of visual content) for hosting a merchant's e-commerce (or online) store. In one instance, the merchant(s) include a brick-and-mortar retail location or an e-commerce/web-based merchant with a POS device or a web payment interface for rendering goods and/or services to the user(s).

In one embodiment, the second system 103 includes any type of mobile terminal, wireless terminal, fixed terminal, or portable terminal utilized by user(s) (e.g., customers) for communicating with the other system(s) within the system 100. The second system 103 includes, but are not restricted to, a mobile handset (e.g., a mobile device storing access device information), a wireless communication device, a station, a unit, a device, a multimedia computer (e.g., computer system 400), an Internet node, a communicator, a dashboard computer, a point of sale (POS) device, a data server, or any combination thereof, including the accessories and peripherals of these devices, or any combination thereof. The second system 103 provides various input means (e.g., a touch screen capability, a keyboard and keypad data entry, a voice-based input mechanism, etc.) and output means (e.g., generating, sharing, and viewing of visual content) for facilitating user(s) during an electronic messaging (e.g., online transaction) with the merchant(s). In one instance, the user(s) are individuals, companies, or other entities having accounts with an issuer. The user(s) have at least one access device associated with an account with the issuer. In one embodiment, the access device includes a debit card, a credit card, a gift card, a loyalty card, a bonus points card, a contactless payment device, a digital payment device, a digital wallet, etc. The access device may be used at any location, for example, brick-and-mortar stores, online e-commerce websites, e-commerce apps, etc., where the access device's sponsoring networks are accepted.

In one embodiment, the third system 105 includes computing devices utilized by the acquirer(s) to send, receive, and process data relating to an electronic message (e.g., online transaction). The computing devices of the third system 105 perform computations and logic operations without human intervention. In one instance, the computing device consists of a standalone unit or several interconnected units to provide a specific set of functions or more general functions such as a desktop computer. In one instance, the acquirer(s) are entities that utilize the third system 105 to route the value for an electronic message (e.g., the amount for an online transaction) from an issuer to the account of the merchant(s) to complete the electronic message. The acquirer(s) utilize the third system 105 to provide a variety of electronic payment processing services to the merchant(s). For example, the acquirer(s) receives value for an electronic message that occurs at a POS terminal associated with the merchant(s). The acquirer(s) process the information and sends the information to the consumer's respective financial institution via an appropriate payment network depending on the particulars of the access device.

In one embodiment, the fourth system 107 includes computing devices utilized by the issuer(s) to provide financial services to the user(s). The computing devices of the fourth system 107 perform computations and logic operations without human intervention. In one instance, the computing device consists of a standalone unit or several interconnected units to provide a specific set of functions or more general functions such as a desktop computer. In one instance, the issuer(s) include entities (e.g., banks, credit union, or other financial institutions) that manages payment accounts on behalf of user(s) (e.g., customer(s)). For example, the issuer(s) hold accounts for the user(s), and the user(s) have an access device (e.g., debit cards, credit cards, etc.) affiliated with that account. The issuer represents the user(s) in an electronic message.

In one example embodiment, the issuer(s), via the fourth system 107, issues an access device to the user(s). The user(s), via the second system 103, utilize the access device during an electronic messaging to purchase a service offered by the merchant(s). This triggers an authentication flow, and the merchant(s), via the first system 101, communicate with the acquirer(s) to receive the value for the services rendered to the user(s). The acquirer(s), via the third system 105, communicate with the issuer(s) through a vast network of switches, gateways, and servers that are monitored, in real-time or near real-time, by the authorization platform 111.

In one embodiment, various elements of the system 100 communicate with each other through the communication network 109. The communication network 109 supports a variety of different communication protocols and communication techniques. In one embodiment, the communication network 109 allows the first system 101, the second system 103, the third system 105, and the fourth system 107, to communicate with the authorization platform 111. The communication network 109 of the system 100 includes one or more networks such as a data network, a wireless network, a telephony network, or any combination thereof. It is contemplated that the data network is any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network is, for example, a cellular communication network and employs various technologies including 5G (5th Generation), 4G, 3G, 2G, Long Term Evolution (LTE), wireless fidelity (Wi-Fi), Bluetooth®, Internet Protocol (IP) data casting, satellite, mobile ad-hoc network (MANET), vehicle controller area network (CAN bus), and the like, or any combination thereof.

In one embodiment, the authorization platform 111 is a platform with multiple interconnected components. The authorization platform 111 includes one or more servers, intelligent networking devices, computing devices, components, and corresponding software for determining network pairings and plurality of factors associated with the network pairings for secure and efficient routing of electronic message(s). The authorization platform 111 receives a request from the first system 101 for an electronic message (e.g., online transaction) associated with an access device of the second system 103. In one instance, electronic messages are online transactions for adding/removing funds from an account for a service. In one instance, the electronic message is a special electronic message (e.g., CNP transaction or any other transaction type). The authorization platform 111 determines network pairings between a plurality of networks associated with the access device (e.g., access device issuing networks such as Visa®, Mastercard®, Discover®, American Express®, global signature debit networks, etc.) and a plurality of regional networks (e.g., personal identification number (PIN) regional networks, or any other regional networks), for authenticating the request for the electronic message. Each network may have its own set of authentication protocols and security measures. By establishing pairings between different networks, the authorization platform 111 can leverage diverse authentication protocols, adding layers of security to the transaction process. The authorization platform 111 processes past data associated with each of the network pairings to determine a plurality of factors (e.g., the probability of an approval of the electronic message, the probability of a chargeback, the probability of fraud, the value of the electronic message, the latency in communicating the electronic message within a network system, and/or the preference information of the second system 103) for routing the electronic message. By systematically evaluating these parameters, the authorization platform 111 intelligently select the most optimal network for processing. The authorization platform 111 routes the request to at least one of the plurality of networks associated with the access device or at least one of the plurality of regional networks based on the plurality of factors. This dynamic selection ensures that the transaction authentication process is optimized through the most efficient network route, reducing latency and facilitating quicker response.

In one embodiment, the authorization platform 111 comprises a data processing module 113, a computation module 115, a decision module 117, a machine learning module 119, a user interface module 121, or any combination thereof. As used herein, terms such as "component" or "module" generally encompass hardware and/or software, e.g., that a processor or the like used to implement associated functionality. It is contemplated that the functions of these components are combined in one or more components or performed by other components of equivalent functionality.

In one embodiment, the data processing module 113 collects, in real-time or near real-time, relevant data associated with the electronic messages (e.g., online transactions), user(s) (e.g., customers), and/or merchant(s), through various data collection techniques. The data processing module 113 includes various software applications (e.g., data mining applications in Extended Meta Language (XML)) that automatically search for and return relevant data. For example, the data processing module 113 uses a web-crawling component to access various data sources to collect relevant data pertaining to the electronic messages and/or the users, so that risk identification, analysis, routing, and monitoring are performed using the most recent data. In one instance, the relevant data associated with the users include transaction data (e.g., transaction history, past fraudulent transactions, etc.), financial data (e.g., past financial information, credit reports, chargeback data, etc.), preference data, and/or personal data. In one instance, the relevant data associated with the merchants include transaction volume, financial data, chargeback statistics, and/or service type. In one instance, the relevant data associated with the electronic messages include latency data and/or transaction metadata (e.g., timestamps, transaction identifiers, geolocation). In one embodiment, the data processing module 113 performs data standardization (e.g., standardizing and unifying data) and/or data cleansing on the collected data. For example, data standardization includes converting the collected data into a common format (e.g., machine readable form) that is easily processed by other modules and platforms. For example, data cleansing includes removing or correcting erroneous data by cross-checking the data with a validated data set or validating and correcting values against a known list of entities.

In one embodiment, the computation module 115 calculates the probability of approval of the electronic message based on the approval rate of past electronic messages by the network pairings between first network 125 (e.g., global signature networks) and second network 127 (e.g., regional networks) within a plurality of payment segments (e.g., bank identification number (BIN), transaction type, sales amount, merchant category code (mcc), merchant type, time of day, day of week, etc.). In one embodiment, the computation module 115 calculates expected benefits to the first system 101 (e.g., merchant(s)) based on a difference between each of the network pairings regarding the probability of the approval of the electronic message and the value of the electronic message (e.g., transaction cost). In one embodiment, the computation module 115 calculates a differential value (e.g., differential cost) for authorizing and settling the electronic message between each of the network pairings based on one or more fees (e.g., interchange fees, switch fees, ancillary fees, or any other fees). In one embodiment, the computation module 115 calculates the probability of the chargeback based on the number of electronic messages submitted for chargeback and the total number of electronic messages within the payment segments. In one embodiment, the computation module 115 calculates an expected value of the fraud based on the probability of the chargeback, a cost of the chargeback, and/or a value of the electronic message within the payment segments. The computation module 115 transmits the differential value, expected value, and expected benefits to the decision module 117.

In one embodiment, the decision module 117 pairs the first network 125 (e.g., networks associated with the access device) and the second network 127 (e.g., regional networks) for authenticating the request for an electronic message. In one instance, the decision module 117 pairs the first network 125 and the second network 127 based on pre-configured rules, attributes of the electronic message (e.g., cost of the online transaction, transaction type, merchant type, etc.), or preference information of the participants (e.g., least cost routing, most secure routing, etc.). In one embodiment, the first network 125 are card networks (e.g., Visa®, Mastercard®, Discover®, American Express®, etc.) that authorizes the resources (e.g., funds, money) to travel from the account of the second system 103 to the account of the first system 101. In one embodiment, the second network 127 are regional PIN debit networks (e.g., Pulse®, Star®, NYCE®, Interlink®, Maestro®, etc.). In one embodiment, the decision module 117 compares within each of the plurality of payment segments the differential value of the electronic message between the network pairings, the expected value of fraud, and the expected benefit. The decision module 117 recommends a route switch between the first network 125 or the second network 127 of the network pairings.

In one instance, the first network 125 serves as a standardized infrastructure that connects various financial institutions, merchants, and payment processors. Routing electronic messages through the first network 125 provides global reach and interoperability, allowing transactions to be processed across various financial institutions and merchants worldwide. This global connectivity enhances the accessibility and convenience for users engaging in cross-border transactions. Additionally, the first network 125 implements robust security measures and fraud detection systems contributing to a secure payment environment. In one instance, routing electronic messages through the second network 127 provides reduced latency, as local networks generally have faster and more direct communication between entities involved in the transactions. This leads to quicker transaction times and improved overall system responsiveness. Additionally, the second network 127 can enhance cost efficiency, as local data transmission often incurs lower fees. Improved security is another benefit, as local networks can implement region-specific security measures and compliance standards, contributing to a more tailored and robust defense mechanism.

In one embodiment, the machine learning module 119 is configured for supervised machine learning, utilizing training data (e.g., training data 312 illustrated in the training flow chart 300). The trained model is configured for processing historical data associated with the network pairings to learn patterns indicative of fraudulent activities, chargebacks, latency in communicating the electronic messages, and/or approval rate of the electronic messages. In one example embodiment, the machine learning module 119 performs model training using training data (e.g., data from other modules, that contain input and correct output, to allow the model to learn over time). The training is performed based on the deviation of a processed result from a documented result when the inputs are fed into the machine learning model (e.g., an algorithm measures its accuracy through the loss function, adjusting until the error has been sufficiently minimized).

In one embodiment, the machine learning module 119 randomizes the ordering of the training data, visualizes the training data to identify relevant relationships between different variables, identifies any data imbalances, and splits the training data into two parts where one part is for training a model and the other part is for validating the trained model, de-duplicating, normalizing, correcting errors in the training data, and so on. The machine learning module 119 implements various machine learning techniques, e.g., neural network (e.g., recurrent neural networks, graph convolutional neural networks, deep learning neural networks), decision tree learning, association rule learning, inductive programming logic, K-nearest neighbors, cox proportional hazards model, support vector machines, Bayesian models, Gradient boosted machines (GBM), LightGBM (LGBM), Xtra tree classifier, etc. Implementation of the machine learning module 119 is discussed in detail below.

By utilizing advanced algorithms and pattern recognition, machine learning models can analyze vast amounts of transaction data to identify patterns, anomalies, and potential fraud indicators. The machine learning algorithms can learn from historical transaction data to predict the probability of transaction approval, chargeback, and fraud for a given set of parameters. This enables dynamic and adaptive decision-making during network paring, ensuring that the most suitable network is selected based on real-time risk assessment. Additionally, the machine learning model can continuously evolve and adapt to new and emerging threats, proving a proactive defense against evolving fraud tactics.

The user interface module 121 enables a presentation of a graphical user interface (GUI) in the first system 101, the second system 103, the third system 105, and the fourth system 107 for facilitating the electronic message. In one embodiment, the user interface module 121 employs various application programming interfaces (APIs) or other function calls to enable the display of graphics primitives such as buttons, data entry fields, menus, graphs, icons, etc. The user interface module 121 causes interfacing of guidance information to include, at least in part, one or more annotations, audio messages, video messages, or a combination thereof pertaining to the electronic message. The user interface module 121 also comprises a variety of interfaces, for example, interfaces for data input and output devices, referred to as I/O devices, storage devices, and the like. Still further, the user interface module 121 is configured to operate in connection with augmented reality (AR) processing techniques, wherein various applications, graphic elements, and features interact.

The above presented modules and components of the authorization platform 111 are implemented in hardware, firmware, software, or a combination thereof. Though depicted as a separate entity in FIG. 1, it is contemplated that the authorization platform 111 is also implemented for direct operation by the first system 101, the second system 103, the third system 105, and the fourth system 107. As such, the authorization platform 111 generates direct signal inputs by way of the operating system of the first system 101, the second system 103, the third system 105, and the fourth system 107. In another embodiment, one or more of the modules 113-121 are implemented for operation by the first system 101, the second system 103, the third system 105, and the fourth system 107, as the authorization platform 111. The various executions presented herein contemplate any and all arrangements and models.

By way of example, the first system 101, the second system 103, the third system 105, the fourth system 107, and the authorization platform 111 communicate with each other and other components of the communication network 109 using well known, new or still developing protocols. In this context, a protocol includes a set of rules defining how the network nodes within the communication network 109 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

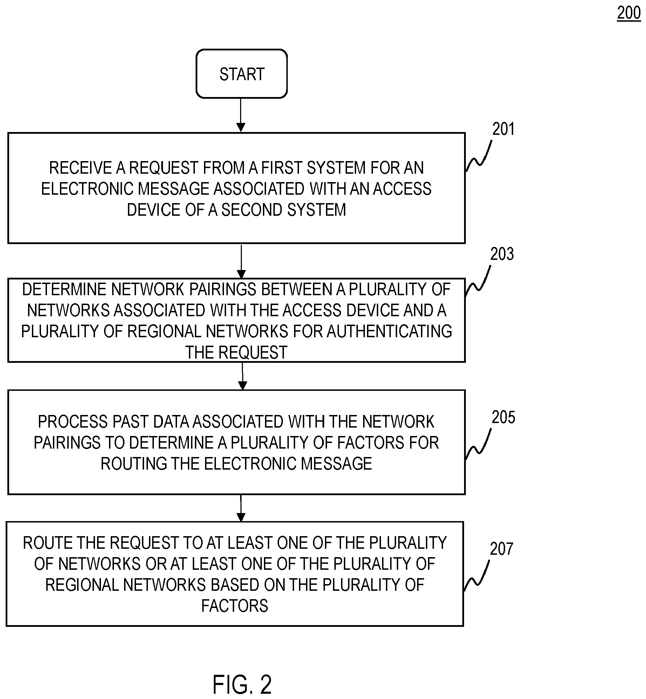

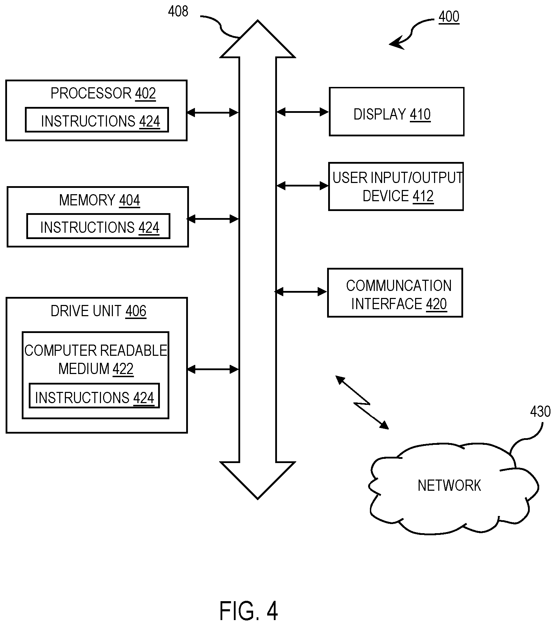

FIG. 2 is a flowchart of a process for determining network pairings and a plurality of factors associated with the network pairings for secure and efficient routing of electronic message(s), according to aspects of the disclosure. In various embodiments, the authorization platform 111 and/or any of the modules 113-121 performs one or more portions of the process 200 and are implemented using, for instance, a chip set including a processor and a memory as shown in FIG. 4. As such, the authorization platform 111 and/or any of modules 113-121 provide means for accomplishing various parts of the process 200, as well as means for accomplishing embodiments of other processes described herein in conjunction with other components of the system 100. Although the process 200 is illustrated and described as a sequence of steps, it is contemplated that various embodiments of the process 200 are performed in any order or combination and need not include all of the illustrated steps.

In step 201, the authorization platform 111 receives, via data processing module 113, a request (e.g., an authentication request) from the first system 101 (e.g., a device associated with a merchant) for an electronic message (e.g., online transaction) associated with an access device (e.g., credit card, debit card, etc.) of the second system 103 (e.g., a device associated with a consumer). In one instance, the electronic message is a special electronic message (e.g., CNP transaction) based on an identifier included in the electronic message. An identifier is a character, a symbol, an item, a number, or a sequence thereof that identifies the electronic message as the CNP transaction (e.g., remote transactions made without swiping, inserting, or tapping the access device on a payment terminal of the first system 101). In one example embodiment, the first system 101 receives access device information from the second system 103 during an electronic messaging for goods or services offered by the first system 101. The first system 101 transmits the electronic message with an authentication request to the third system 105 (e.g., devices utilized by the acquirers). The third system 105 transmits the electronic message and the authentication request to the authorization platform 111 for further processing.

In step 203, the authorization platform 111 determines, via decision module 117, network pairings between first network 125 (e.g., networks sponsoring the access devices, global signature debit networks) and a plurality of regional networks (e.g., PIN regional networks) for authenticating the request for the electronic message. In one instance, the network pairing includes associating the plurality of networks (e.g., the first network 125, the second network 127) to facilitate electronic message. For example, the authorization platform 111 pairs Visa® versus (Pulse®, Star®, NYCE®, Interlink®, Maestro®); or pairs Mastercard® versus (Pulse®, Star®, NYCE®, Interlink®, Maestro®); or pairs American-Express® versus (Pulse®, Star®, NYCE®, Interlink®, Maestro®). In one instance, such pairings are based on pre-configured rules, attributes of the electronic message (e.g., value of the online transaction, transaction type, merchant type, associated fees, etc.), or preference information of the participants (e.g., least cost routing, most secure routing, etc.). By pairing these networks, the authorization platform 111 can assess factors like transaction approval probability, chargeback likelihood, fraud probability, transaction value, and network latency to dynamically select the most optimal network for processing electronic messages.

In step 205, the authorization platform 111 processes, via computation module 115, past data associated with the network pairings to determine a plurality of factors for routing the electronic message. In one instance, the plurality of factors include one or more of a probability of approval of the electronic message, a probability of a chargeback, a probability of fraud, a value of the electronic message, a latency in communicating the electronic message within a network system, and/or preference information of the second system 103 (e.g., consumers). In one embodiment, the authorization platform 111 determines, via computation module 115, the probability of the approval of the electronic message based on approval rates of past electronic messages by the network pairings within the payment segments. In one instance, the payment segments include identification data (e.g., BIN), electronic message type, total value of the electronic message (e.g., sales amount), category code data (e.g., MCC), and/or temporal information (e.g., time of the online transaction). In one instance, the approval rate of the electronic messages is based on the number of approved electronic messages and the total number of electronic messages. For example:

$$Approval\ Rate = \frac{Number\ of\ Approved\ Electronic\ Message}{Total\ number\ of\ Electronic\ Message}$$

In one instance, selecting a network based on approval rate benefits the transaction routing by optimizing for successful transaction authorizations, reducing the likelihood of declines, enhancing overall transaction efficiency, and ensuring a smoother payment process for the users.

In one embodiment, the authorization platform 111 measures, via computation module 115, an expected benefit to the first system 101 (e.g., merchant(s)) based on a difference between each of the network pairings (e.g., Visa® versus (Pulse®, Star®, NYCE®, Interlink®, Maestro®); or pairs Mastercard® versus (Pulse®, Star®, NYCE®, Interlink®, Maestro®); or pairs AmericanExpress® versus (Pulse®, Star®, NYCE®, Interlink®, Maestro®)) regarding the probability of the approval of the electronic message and the value of the electronic message. For example:

$$Difference\ between\ each\ of\ the\ network\ pairings$$

$$= \text{approval of the electronic message}$$

$$* \text{ the value of the electronic message}$$

In one instance, routing of electronic messages by prioritizing networks that not only have a high likelihood of approval but also high-cost electronic message leads to improved resource utilization, revenue potential, and efficiency.

In one embodiment, the authorization platform 111 measures, via computation module 115, a differential value (e.g., differential cost) for authorizing and settling the electronic message between each of the network pairings (e.g., Visa® versus (Pulse®, Star®, NYCE®, Interlink®, Maestro®); or pairs Mastercard® versus (Pulse®, Star®, NYCE®, Interlink®, Maestro®); or pairs AmericanExpress® versus (Pulse®, Star®, NYCE®, Interlink®, Maestro®)) based on one or more fees. In one instance, the one or more fees include interchange fees, switch fees, and ancillary fees. In one instance, optimizing routing of electronic messages based on differential value leads to cost-effectiveness, as different networks may have varying processing fees or interchange rates, enabling the system to choose the most economical route for a specific electronic message.

In one embodiment, the authorization platform 111 measures, via computation module 115, the probability of the chargeback based on a number of electronic messages submitted for the chargeback and the total number of electronic messages within the payment segments (e.g., identification data, electronic message type, total value of the electronic message, category code data, and/or temporal information). For example:

$$Probability\ of\ Chargeback = \frac{\text{Number of Electronic Message Chargedback}}{\text{Total number of Electronic Message}}$$

In one instance, routing electronic messages based on chargeback rates minimizes the risk of post-transaction disputes, enhances overall transaction security, and mitigates potential financial losses associated with chargeback fees and disputed transactions.

In one embodiment, the authorization platform 111 measures, via computation module 115, an expected value of fraud (e.g., expected expenses for fraud) based on a probability of the chargeback, a cost of the chargeback, and/or a value of the electronic message within the payment segments (e.g., identification data, electronic message type, total value of the electronic message, category code data, and/or temporal information). For example:

$$Expected\ expenses\ for\ Fraud = \text{Cost of Chargeback} +$$

$$(\text{Value of the special electronic message} *$$

$$\text{Probability of the chargeback within payment segments})$$

In one instance, by considering the expected expenses for fraud, the system can route electronic messages through networks with lower expected fraud expenses and minimal financial risks, thereby enhancing the overall security of the electronic messages.

In step 207, the authorization platform 111 routes, via decision module 117, the request to at least one of the first network 125 or at least one of the second network 127 based on the above determined plurality of factors. For example, the authorization platform 111 compares, via decision module 117, within each of the payment segments the differential value of the electronic message between the network pairings, the expected value of fraud, and the expected benefit to the first system 101. Such a comparison is performed due to the differences in the probability of approval between the same or different network pairs. The authorization platform 111 determines within each of the payment segments at least one of the first network 125 or at least one of the second network 127 has a greater expected benefit than a transaction cost. The authorization platform 111 recommends a route switch between the first network 125 or the second network 127 (e.g., route the electronic message from a negative to a positive route).

In one instance, the authorization platform 111 switches an electronic message with higher value (e.g., online transaction with cost above a threshold level) to the first network 125 (e.g., global signature networks) for secure authentication. In one instance, the authorization platform 111 switches a specific electronic message type (e.g., an online transaction for a specific type of service or with a specific merchant) to at least one of the first network 125 or the second network 127 based on the approval rate of similar types of electronic messages for efficient processing. In one instance, the authorization platform 111 switches an electronic message with a higher chargeback probability to at least one of the first network 125 or the second network 127 based on past chargeback processing data. In one instance, the authorization platform 111 determines higher network traffic and switches an electronic message to another network randomly or per a pre-determined configuration to reduce latency in communication. In one instance, the authorization platform 111 determines a risk factor (e.g., fraud) for an electronic message is above a threshold level, and switches an electronic message to a secure network (e.g., the first network 125) for secure processing. In one instance, the authorization platform 111 determines user preferences (e.g., lower cost) and switches an electronic message to another network (e.g., second network 127) to reduce processing cost. Such network change reduces incorrect and unnecessary payment declines (e.g., false positives), reduces network traffic, improves network security, and improves user experience at a cost that is acceptable to the merchant(s).

In one embodiment, the authorization platform 111 assesses the plurality of factors (e.g., approval rate, network cost, the difference between each network pairing, probability of chargeback, and expected expenses for fraud) and assigns weights based on their significance. In one example, if the cost associated with a network is deemed to be more important than other factors, it is assigned a higher weight. The authorization platform 111 calculates a weighted value that reflects the overall risks and expenses associated with each network pairing. The decision to choose an optimal network is then based on these calculated weighted values, ensuring a comprehensive and data-driven approach to transaction routing that balances cost, risk of fraud, and authorization probability.

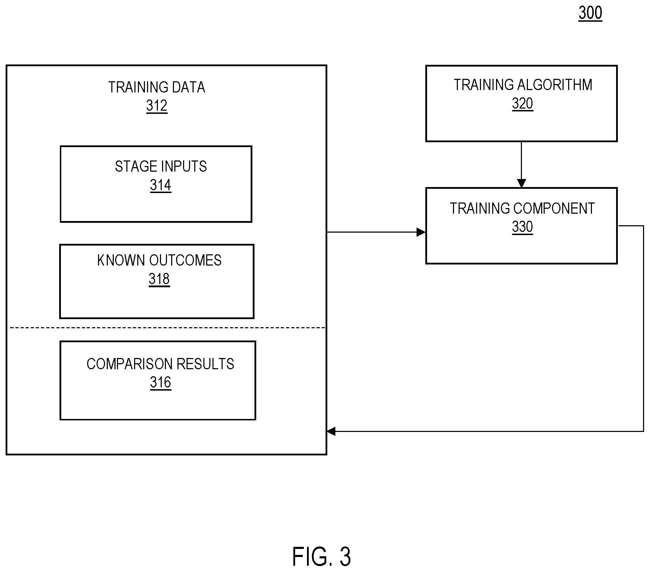

One or more implementations disclosed herein include and/or are implemented using a machine learning model. For example, one or more of the modules of the authorization platform 111 are implemented using a machine learning model and/or are used to train the machine learning model. A given machine learning model is trained using the training flow chart 300 of FIG. 3. Training data 312 includes one or more of stage inputs 314 and known outcomes 318 related to the machine learning model to be trained. Stage inputs 314 are from any applicable source including text, visual representations, data, values, comparisons, and stage outputs, e.g., one or more outputs from one or more steps from FIG. 2. The known outcomes 318 are included for the machine learning models generated based on supervised or semi-supervised training. An unsupervised machine learning model is not be trained using known outcomes 318. Known outcomes 318 includes known or desired outputs for future inputs similar to or in the same category as stage inputs 314 that do not have corresponding known outputs.

The training data 312 and a training algorithm 320, e.g., one or more of the modules implemented using the machine learning model and/or are used to train the machine learning model, is provided to a training component 330 that applies the training data 312 to the training algorithm 320 to generate the machine learning model. According to an implementation, the training component 330 is provided comparison results 316 that compare a previous output of the corresponding machine learning model to apply the previous result to re-train the machine learning model. The comparison results 316 are used by training component 330 to update the corresponding machine learning model. The training algorithm 320 utilizes machine learning networks and/or models including, but not limited to a deep learning network such as Deep Neural Networks (DNN), Convolutional Neural Networks (CNN), Fully Convolutional Networks (FCN) and Recurrent Neural Networks (RCN), probabilistic models such as Bayesian Networks and Graphical Models, classifiers such as K-Nearest Neighbors, and/or discriminative models such as Decision Forests and maximum margin methods, the model specifically discussed herein, or the like.

The machine learning model used herein is trained and/or used by adjusting one or more weights and/or one or more layers of the machine learning model. For example, during training, a given weight is adjusted (e.g., increased, decreased, removed) based on training data or input data. Similarly, a layer is updated, added, or removed based on training data/and or input data. The resulting outputs are adjusted based on the adjusted weights and/or layers.

In general, any process or operation discussed in this disclosure is understood to be computer-implementable, such as the processes illustrated in FIG. 2 are performed by one or more processors of a computer system as described herein. A process or process step performed by one or more processors is also referred to as an operation. The one or more processors are configured to perform such processes by having access to instructions (e.g., software or computer-readable code) that, when executed by one or more processors, cause one or more processors to perform the processes. The instructions are stored in a memory of the computer system. A processor is a central processing unit (CPU), a graphics processing unit (GPU), or any suitable type of processing unit.

A computer system, such as a system or device implementing a process or operation in the examples above, includes one or more computing devices. One or more processors of a computer system are included in a single computing device or distributed among a plurality of computing devices. One or more processors of a computer system are connected to a data storage device. A memory of the computer system includes the respective memory of each computing device of the plurality of computing devices.

FIG. 4 illustrates an implementation of a computer system that executes techniques presented herein. The computer system 400 includes a set of instructions that are executed to cause the computer system 400 to perform any one or more of the methods or computer based functions disclosed herein. The computer system 400 operates as a standalone device or is connected, e.g., using a network, to other computer systems or peripheral devices.

Unless specifically stated otherwise, as apparent from the following discussions, it is appreciated that throughout the specification, discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" refers to any device or portion of a device that processes electronic data, e.g., from registers and/or memory to transform that electronic data into other electronic data that, e.g., is stored in registers and/or memory. A "computer," a "computing machine," a "computing platform," a "computing device," or a "server" includes one or more processors.

In a networked deployment, the computer system 400 operates in the capacity of a server or as a client user computer in a server-client user network environment, or as a peer computer system in a peer-to-peer (or distributed) network environment. The computer system 400 is also implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a landline telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the computer system 400 is implemented using electronic devices that provide voice, video, or data communication. Further, while the computer system 400 is illustrated as a single system, the term "system" shall also be taken to include any collection of systems or sub-systems that individually or jointly execute a set, or multiple sets, of instructions to perform one or more computer functions.

As illustrated in FIG. 4, the computer system 400 includes a processor 402, e.g., a central processing unit (CPU), a graphics processing unit (GPU), or both. The processor 402 is a component in a variety of systems. For example, the processor 402 is part of a standard personal computer or a workstation. The processor 402 is one or more processors, digital signal processors, application specific integrated circuits, field programmable gate arrays, servers, networks, digital circuits, analog circuits, combinations thereof, or other now known or later developed devices for analyzing and processing data. The processor 402 implements a software program, such as code generated manually (i.e., programmed).

The computer system 400 includes a memory 404 that communicates via bus 408. Memory 404 is a main memory, a static memory, or a dynamic memory. Memory 404 includes, but is not limited to computer-readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 404 includes a cache or random-access memory for the processor 402. In alternative implementations, the memory 404 is separate from the processor 402, such as a cache memory of a processor, the system memory, or other memory. Memory 404 is an external storage device or database for storing data. Examples include a hard drive, compact disc ("CD"), digital video disc ("DVD"), memory card, memory stick, floppy disc, universal serial bus ("USB") memory device, or any other device operative to store data. The memory 404 is operable to store instructions executable by the processor 402. The functions, acts, or tasks illustrated in the figures or described herein are performed by processor 402 executing the instructions stored in memory 404. The functions, acts, or tasks are independent of the particular type of instruction set, storage media, processor, or processing strategy and are performed by software, hardware, integrated circuits, firmware, micro-code, and the like, operating alone or in combination. Likewise, processing strategies include multiprocessing, multitasking, parallel processing, and the like.

As shown, the computer system 400 further includes a display 410, such as a liquid crystal display (LCD), an organic light emitting diode (OLED), a flat panel display, a solid-state display, a cathode ray tube (CRT), a projector, a printer or other now known or later developed display device for outputting determined information. The display 410 acts as an interface for the user to see the functioning of the processor 402, or specifically as an interface with the software stored in the memory 404 or in the drive unit 406.

Additionally or alternatively, the computer system 400 includes an input/output device 412 configured to allow a user to interact with any of the components of the computer system 400. The input/output device 412 is a number pad, a keyboard, a cursor control device, such as a mouse, a joystick, touch screen display, remote control, or any other device operative to interact with the computer system 400.

The computer system 400 also includes the drive unit 406 implemented as a disk or optical drive. The drive unit 406 includes a computer-readable medium 422 in which one or more sets of instructions 424, e.g. software, is embedded. Further, the sets of instructions 424 embodies one or more of the methods or logic as described herein. Instructions 424 resides completely or partially within memory 404 and/or within processor 402 during execution by the computer system 400. The memory 404 and the processor 402 also include computer-readable media as discussed above.

In some systems, computer-readable medium 422 includes the set of instructions 424 or receives and executes the set of instructions 424 responsive to a propagated signal so that a device connected to network 430 communicates voice, video, audio, images, or any other data over network 430. Further, the sets of instructions 424 are transmitted or received over the network 430 via the communication port or interface 420, and/or using the bus 408. The communication port or interface 420 is a part of the processor 402 or is a separate component. The communication port or interface 420 is created in software or is a physical connection in hardware. The communication port or interface 420 is configured to connect with the network 430, external media, display 410, or any other components in the computer system 400, or combinations thereof. The connection with network 430 is a physical connection, such as a wired Ethernet connection, or is established wirelessly as discussed below. Likewise, the additional connections with other components of the computer system 400 are physical connections or are established wirelessly. Network 430 alternatively be directly connected to the bus 408.

While the computer-readable medium 422 is shown to be a single medium, the term "computer-readable medium" includes a single medium or multiple media, such as a centralized or distributed database, and/or associated caches and servers that store one or more sets of instructions. The term "computer-readable medium" also includes any medium that is capable of storing, encoding, or carrying a set of instructions for execution by a processor or that causes a computer system to perform any one or more of the methods or operations disclosed herein. The computer-readable medium 422 is non-transitory, and may be tangible.

The computer-readable medium 422 includes a solid-state memory such as a memory card or other package that houses one or more non-volatile read-only memories. The computer-readable medium 422 is a random-access memory or other volatile re-writable memory. Additionally or alternatively, the computer-readable medium 422 includes a magneto-optical or optical medium, such as a disk or tapes or other storage device to capture carrier wave signals such as a signal communicated over a transmission medium. A digital file attachment to an e-mail or other self-contained information archive or set of archives is considered a distribution medium that is a tangible storage medium. Accordingly, the disclosure is considered to include any one or more of a computer-readable medium or a distribution medium and other equivalents and successor media, in which data or instructions are stored.

In an alternative implementation, dedicated hardware implementations, such as application specific integrated circuits, programmable logic arrays, and other hardware devices, is constructed to implement one or more of the methods described herein. Applications that include the apparatus and systems of various implementations broadly include a variety of electronic and computer systems. One or more implementations described herein implement functions using two or more specific interconnected hardware modules or devices with related control and data signals that are communicated between and through the modules, or as portions of an application-specific integrated circuit. Accordingly, the present system encompasses software, firmware, and hardware implementations.

Computer system 400 is connected to network 430. Network 430 defines one or more networks including wired or wireless networks. The wireless network is a cellular telephone network, an 802.10, 802.16, 802.20, or WiMAX network. Further, such networks include a public network, such as the Internet, a private network, such as an intranet, or combinations thereof, and utilizes a variety of networking protocols now available or later developed including, but not limited to TCP/IP based networking protocols. Network 430 includes wide area networks (WAN), such as the Internet, local area networks (LAN), campus area networks, metropolitan area networks, a direct connection such as through a Universal Serial Bus (USB) port, or any other networks that allows for data communication. Network 430 is configured to couple one computing device to another computing device to enable communication of data between the devices. Network 430 is generally enabled to employ any form of machine-readable media for communicating information from one device to another. Network 430 includes communication methods by which information travels between computing devices. Network 430 is divided into sub-networks. The sub-networks allow access to all of the other components connected thereto or the sub-networks restrict access between the components. Network 430 is regarded as a public or private network connection and includes, for example, a virtual private network or an encryption or other security mechanism employed over the public Internet, or the like.

In accordance with various implementations of the present disclosure, the methods described herein are implemented by software programs executable by a computer system. Further, in an example, non-limited implementation, implementations can include distributed processing, component/object distributed processing, and parallel processing. Alternatively, virtual computer system processing can be constructed to implement one or more of the methods or functionality as described herein.

Although the present specification describes components and functions that are implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure is implemented using any appropriate techniques for implementing the functionality described herein. The disclosure is not limited to any particular programming language or operating system.

It should be appreciated that in the above description of example embodiments of the present disclosure, various features are sometimes grouped together in a single embodiment, figure, or description thereof for the purpose of streamlining the disclosure and aiding in the understanding of one or more of the various inventive aspects. This method of the present disclosure, however, is not to be interpreted as reflecting an intention that the claimed embodiments require more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of the present disclosure.

Furthermore, while some embodiments described herein include some but not other features included in other embodiments, combinations of features of different embodiments are meant to be within the scope of the present disclosure, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the present disclosure.

In the description provided herein, numerous specific details are set forth. However, it is understood that embodiments of the present disclosure are practiced without these specific details. In other instances, well-known methods, structures and techniques have not been shown in detail in order not to obscure an understanding of this description.

Thus, while there has been described what are believed to be the preferred embodiments of the present disclosure, those skilled in the art will recognize that other and further modifications are made thereto without departing from the spirit of the present disclosure, and it is intended to claim all such changes and modifications as falling within the scope of the present disclosure. For example, any formulas given above are merely representative of procedures that may be used. Functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted except in light of the attached claims and their equivalents.

The present disclosure furthermore relates to the following aspects.

Example 1. A computer-implemented method comprising: receiving, by one or more processors, a request from a first system for an electronic message associated with an access device of a second system, wherein the electronic message is a special electronic message; determining, by the one or more processors, network pairings between a plurality of networks associated with the access device and a plurality of regional networks for authenticating the electronic message; processing, by the one or more processors, past data associated with the network pairings to determine a plurality of factors for routing the electronic message; and routing, by the one or more processors, the electronic message to at least one of the plurality of networks associated with the access device or at least one of the plurality of regional networks based on the plurality of factors.

Example 2. The computer-implemented method of example 1, wherein the plurality of factors include a probability of an approval of the electronic message, a probability of a chargeback, a probability of fraud, a value of the electronic message, a latency in communicating the electronic message within a network system, and/or preference information of the second system.

Example 3. The computer-implemented method of example 2, wherein processing the past data associated with the network pairings to determine the plurality of factors for routing the electronic message comprises: determining, by the one or more processors, the probability of the approval of the electronic message based on an approval rate of past electronic messages by the network pairings within a plurality of payment segments, wherein the approval rate of the past electronic messages within the plurality of payment segments is based on a number of approved electronic messages and a total number of electronic messages.

Example 4. The computer-implemented method of example 3, wherein the plurality of payment segments include an identification data, an electronic message type, a total value of the electronic message, a category code data, and/or a temporal information.

Example 5. The computer-implemented method of any of examples 3-4, wherein processing the past data associated with the network pairings to determine the plurality of factors for routing the electronic message, further comprises: measuring, by the one or more processors, an expected benefit to the first system based on a difference between each of the network pairings regarding the probability of the approval of the electronic message and the value of the electronic message.

Example 6. The computer-implemented method of example 5, wherein processing the past data associated with the network pairings to determine the plurality of factors for routing the electronic message, further comprises: measuring, by the one or more processors, a differential value for authorizing and settling the electronic message between each of the network pairings based on one or more fees.

Example 7. The computer-implemented method of example 6, wherein processing the past data associated with the network pairings to determine the plurality of factors for routing the electronic message, further comprises: measuring, by the one or more processors, the probability of the chargeback based on a number of electronic messages submitted for the chargeback and the total number of electronic messages within the plurality of payment segments.

Example 8. The computer-implemented method of example 7, further comprising: measuring, by the one or more processors, an expected value of the fraud based on the probability of the chargeback, a cost of the chargeback, and/or a value of the electronic message within the plurality of payment segments.

Example 9. The computer-implemented method of example 8, wherein routing the electronic message to at least one of the plurality of networks associated with the access device or at least one of the plurality of regional networks comprises: comparing, by the one or more processors, within each of the plurality of payment segments the differential value of the electronic message between the network pairings, the expected value of fraud, and the expected benefit.

Example 10. The computer-implemented method of example 9, further comprising: determining, by the one or more processors, within each of the plurality of payment segments the at least one of the plurality of networks or the at least one of the plurality of regional networks has a greater expected benefit than a transaction cost; and recommending, by the one or more processors, a route switch between the plurality of networks or the plurality of regional networks of the network pairings.

Example 11. A system comprising: one or more processors of a computing system; and at least one non-transitory computer readable medium storing instructions which, when executed by the one or more processors, cause the one or more processors to perform operations comprising: receiving a request from a first system for an electronic message associated with an access device of a second system, wherein the electronic message is a special electronic message; determining network pairings between a plurality of networks associated with the access device and a plurality of regional networks for authenticating the electronic message; processing past data associated with the network pairings to determine a plurality of factors for routing the electronic message; and routing the electronic message to at least one of the plurality of networks associated with the access device or at least one of the plurality of regional networks based on the plurality of factors.

Example 12. The system of example 11, wherein the plurality of factors include a probability of an approval of the electronic message, a probability of a chargeback, a probability of fraud, a value of the electronic message, a latency in communicating the electronic message within a network system, and/or preference information of the second system.

Example 13. The system of example 12, wherein processing the past data associated with the network pairings to determine the plurality of factors for routing the electronic message comprises: determining the probability of the approval of the electronic message based on an approval rate of past electronic messages by the network pairings within a plurality of payment segments, wherein the approval rate of the past electronic messages within the plurality of payment segments is based on a number of approved electronic messages and a total number of electronic messages, and wherein the plurality of payment segments include an identification data, an electronic message type, a total value of the electronic message, a category code data, and/or a temporal information.

Example 14. The system of example 13, wherein processing the past data associated with the network pairings to determine the plurality of factors for routing the request, further comprises: measuring an expected benefit to the first system based on a difference between each of the network pairings regarding the probability of the approval of the electronic message and the value of the electronic message.

Example 15. The system of example 14, wherein processing the past data associated with the network pairings to determine the plurality of factors for routing the electronic message, further comprises: measuring a differential value for authorizing and settling the electronic message between each of the network pairings based on one or more fees.

Example 16. The system of example 15, wherein processing the past data associated with the network pairings to determine the plurality of factors for routing the electronic message, further comprises: measuring the probability of the chargeback based on a number of electronic messages submitted for the chargeback and the total number of electronic messages within the plurality of payment segments.

Example 17. The system of example 16, further comprising: measuring an expected value of the fraud based on the probability of the chargeback, a cost of the chargeback, and/or a value of the electronic message within the plurality of payment segments; comparing within each of the plurality of payment segments the differential value of the electronic message between the network pairings, the expected value of fraud, and the expected benefit; determining within each of the plurality of payment segments the at least one of the plurality of networks or the at least one of the plurality of regional networks has a greater expected benefit than a transaction cost; and recommending a route switch between the plurality of networks or the plurality of regional networks of the network pairings.

Example 18. A non-transitory computer readable medium, the non-transitory computer readable medium storing instructions which, when executed by one or more processors of a computing system, cause the one or more processors to perform operations comprising: receiving a request from a first system for an electronic message associated with an access device of a second system, wherein the electronic message is a special electronic message; determining network pairings between a plurality of networks associated with the access device and a plurality of regional networks for authenticating the electronic message; processing past data associated with the network pairings to determine a plurality of factors for routing the electronic message; and routing the electronic message to at least one of the plurality of networks associated with the access device or at least one of the plurality of regional networks based on the plurality of factors.

Example 19. The non-transitory computer readable medium of example 18, wherein the plurality of factors include a probability of an approval of the electronic message, a probability of a chargeback, a probability of fraud, a value of the electronic message, a latency in communicating the electronic message within a network system, and/or preference information of the second system.

Example 20. The non-transitory computer readable medium of example 19, wherein processing the past data associated with the network pairings to determine the plurality of factors for routing the electronic message comprises: determining the probability of the approval of the electronic message based on an approval rate of past electronic messages by the network pairings within a plurality of payment segments, wherein the approval rate of the past electronic messages within the plurality of payment segments is based on a number of approved electronic messages and a total number of electronic messages, and wherein the plurality of payment segments include an identification data, an electronic message type, a total value of the electronic message, a category code data, and/or a temporal information.

**Claims**

1. A computer-implemented method comprising:

   receiving, by one or more processors, a request from a first system for an electronic message associated with an access device of a second system, wherein the electronic message is a special electronic message;
   determining, by the one or more processors, network pairings between a plurality of networks associated with the access device and a plurality of regional networks for authenticating the electronic message;
   processing, by the one or more processors, past data associated with the network pairings to determine a plurality of factors for routing the electronic message; and
   routing, by the one or more processors, the electronic message to at least one of the plurality of networks associated with the access device or at least one of the plurality of regional networks based on the plurality of factors.

2. The computer-implemented method of claim 1, wherein the plurality of factors include a probability of an approval of the electronic message, a probability of a chargeback, a probability of fraud, a value of the electronic message, a latency in communicating the electronic message within a network system, and/or preference information of the second system.

3. The computer-implemented method of claim 2, wherein processing the past data associated with the network pairings to determine the plurality of factors for routing the electronic message comprises:

   determining, by the one or more processors, the probability of the approval of the electronic message based on an approval rate of past electronic messages by the network pairings within a plurality of payment segments, wherein the approval rate of the past electronic messages within the plurality of payment segments is based on a number of approved electronic messages and a total number of electronic messages.

4. The computer-implemented method of claim 3, wherein the plurality of payment segments include an identification data, an electronic message type, a total value of the electronic message, a category code data, and/or a temporal information.

5. The computer-implemented method of claim 3, wherein processing the past data associated with the network pairings to determine the plurality of factors for routing the electronic message, further comprises:
   measuring, by the one or more processors, an expected benefit to the first system based on a difference between each of the network pairings regarding the probability of the approval of the electronic message and the value of the electronic message.

6. The computer-implemented method of claim 5, wherein processing the past data associated with the network pairings to determine the plurality of factors for routing the electronic message, further comprises:
measuring, by the one or more processors, a differential value for authorizing and settling the electronic message between each of the network pairings based on one or more fees.

7. The computer-implemented method of claim 6, wherein processing the past data associated with the network pairings to determine the plurality of factors for routing the electronic message, further comprises:
measuring, by the one or more processors, the probability of the chargeback based on a number of electronic messages submitted for the chargeback and the total number of electronic messages within the plurality of payment segments.

8. The computer-implemented method of claim 7, further comprising:
measuring, by the one or more processors, an expected value of the fraud based on the probability of the chargeback, a cost of the chargeback, and/or a value of the electronic message within the plurality of payment segments.

9. The computer-implemented method of claim 8, wherein routing the electronic message to at least one of the plurality of networks associated with the access device or at least one of the plurality of regional networks comprises:
comparing, by the one or more processors, within each of the plurality of payment segments the differential value of the electronic message between the network pairings, the expected value of fraud, and the expected benefit.

10. The computer-implemented method of claim 9, further comprising:

determining, by the one or more processors, within each of the plurality of payment segments the at least one of the plurality of networks or the at least one of the plurality of regional networks has a greater expected benefit than a transaction cost; and
recommending, by the one or more processors, a route switch between the plurality of networks or the plurality of regional networks of the network pairings.

11. A system comprising:

one or more processors of a computing system; and
at least one non-transitory computer readable medium storing instructions which, when executed by the one or more processors, cause the one or more processors to perform operations of the computer-implemented method of any one of claims 1 - 10.

12. A non-transitory computer readable medium, the non-transitory computer readable medium storing instructions which, when executed by one or more processors of a computing system, cause the one or more processors to perform operations comprising:

receiving a request from a first system for an electronic message associated with an access device of a second system, wherein the electronic message is a special electronic message;
determining network pairings between a plurality of networks associated with the access device and a plurality of regional networks for authenticating the electronic message;
processing past data associated with the network pairings to determine a plurality of factors for routing the electronic message; and
routing the electronic message to at least one of the plurality of networks associated with the access device or at least one of the plurality of regional networks based on the plurality of factors.

13. The non-transitory computer readable medium of claim 12, wherein the plurality of factors include a probability of an approval of the electronic message, a probability of a chargeback, a probability of fraud, a value of the electronic message, a latency in communicating the electronic message within a network system, and/or preference information of the second system.

14. The non-transitory computer readable medium of claim 13, wherein processing the past data associated with the network pairings to determine the plurality of factors for routing the electronic message comprises:

determining the probability of the approval of the electronic message based on an approval rate of past electronic messages by the network pairings within a plurality of payment segments,

wherein the approval rate of the past electronic messages within the plurality of payment segments is based on a number of approved electronic messages and a total number of electronic messages, and

wherein the plurality of payment segments include an identification data, an electronic message type, a total value of the electronic message, a category code data, and/or a temporal information.

FIG. 1

<u>200</u>

START

RECEIVE A REQUEST FROM A FIRST SYSTEM FOR AN ELECTRONIC MESSAGE ASSOCIATED WITH AN ACCESS DEVICE OF A SECOND SYSTEM — 201

DETERMINE NETWORK PAIRINGS BETWEEN A PLURALITY OF NETWORKS ASSOCIATED WITH THE ACCESS DEVICE AND A PLURALITY OF REGIONAL NETWORKS FOR AUTHENTICATING THE REQUEST — 203

PROCESS PAST DATA ASSOCIATED WITH THE NETWORK PAIRINGS TO DETERMINE A PLURALITY OF FACTORS FOR ROUTING THE ELECTRONIC MESSAGE — 205

ROUTE THE REQUEST TO AT LEAST ONE OF THE PLURALITY OF NETWORKS OR AT LEAST ONE OF THE PLURALITY OF REGIONAL NETWORKS BASED ON THE PLURALITY OF FACTORS — 207

FIG. 2

300

| TRAINING DATA<br>312 |
| --- |
| STAGE INPUTS<br>314 |
| KNOWN OUTCOMES<br>318 |
| COMPARISON RESULTS<br>316 |

| TRAINING ALGORITHM<br>320 |
| --- |

| TRAINING COMPONENT<br>330 |
| --- |

FIG. 3

FIG. 4

Europäisches Patentamt

European Patent Office

Office européen des brevets

# EUROPEAN SEARCH REPORT

**Application Number**

EP 25 16 4585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/150091 A1 (WORLDPAY LLC [US]) 14 July 2022 (2022-07-14) | 1,2, 11-13 | INV. G06Q20/40 |
| Y | * paragraph [0033] - paragraph [0036] * | 3-6,14 | H04M15/00 |
| A | * paragraph [0048] * <br> * paragraph [0065] * | 7-10 | |
| | ----- | | |
| X | US 2013/054465 A1 (SAKATA ROSS [US] ET AL) 28 February 2013 (2013-02-28) | 1,11,12 | |
| Y | * paragraph [0037] * | 3-6,14 | |
| A | * paragraph [0049] * <br> * paragraph [0058] * <br> * paragraph [0060] - paragraph [0061] * <br> * paragraph [0070] * | 7-10 | |
| | ----- | | |

**TECHNICAL FIELDS SEARCHED (IPC)**

G06Q
H04L
H04W
G07G
H04M

The present search report has been drawn up for all claims

| Place of search | Date of completion of the search | Examiner |
|---|---|---|
| Munich | 10 April 2025 | Krauß, Stefan |

EPO FORM 1503 03.82 (P04C01)

## ANNEX TO THE EUROPEAN SEARCH REPORT
## ON EUROPEAN PATENT APPLICATION NO.

EP 25 16 4585

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | | Publication date |
|---|---|---|---|---|
| WO 2022150091 A1 | 14-07-2022 | AU | 2021416824 A1 | 17-08-2023 |
| | | CA | 3204107 A1 | 14-07-2022 |
| | | CN | 116830137 A | 29-09-2023 |
| | | EP | 4264525 A1 | 25-10-2023 |
| | | US | 2022215392 A1 | 07-07-2022 |
| | | US | 2023109042 A1 | 06-04-2023 |
| | | US | 2023342778 A1 | 26-10-2023 |
| | | WO | 2022150091 A1 | 14-07-2022 |
| US 2013054465 A1 | 28-02-2013 | NONE | | |

EPO FORM P0459

For more details about this annex : see Official Journal of the European Patent Office, No. 12/82